# EUROPÄISCHE PATENTANMELDUNG

(11) **EP 2 224 301 A1**
(43) Veröffentlichungstag der Anmeldung: **01.09.2010**
(21) Anmeldenummer: 09002891.1
(22) Anmeldetag: 27.02.2009
(51) Int. Cl.: G05B 19/418, G05B 19/042, G05B 23/02

(54) **Automatisierungsanordnung mit einer industriellen Automatisierungskomponente und Verfahren zur Verwaltung einer industriellen Automatisierungskomponente**

(71) Anmelder: Siemens Aktiengesellschaft, 80333 München (DE)
(72) Erfinder: Edelmann, Thomas, 96050 Bamberg (DE); Epple, Ulrich, Prof., 35614 Asslar (DE); Schlütter, Markus, 41812 Erkelenz (DE); Schuster, Armin, 90427 Nürnberg (DE)

(57) **Zusammenfassung**

Die Erfindung betrifft eine Automatisierungsanordnung mit einer Vielzahl an industriellen Automatisierungskomponenten, wobei eine Mehrzahl dieser Automatisierungskomponenten zur Laufzeit verwaltbar ist und mit jeweils einer Verwaltungsinstanz verknüpft ist. Dabei ist die Verwaltungsinstanz mit ersten Mitteln zur Zustandserfassung der Automatisierungskomponente und mit zweiten Mitteln zur Beeinflussung der Automatisierungskomponente eingerichtet, und die Verwaltungsinstanz ist mit einer Datenbank verknüpft, wobei die Datenbank zumindest eine Angabe über die durch die Automatisierungsanordnung zu erfüllende Aufgabe und/oder eine Angabe über einen für die Automatisierungsanordnung anzustrebenden Zustand enthält. Die Verwaltungsinstanz ist zu einer Bewertung eines erfassten Zustandes unter Berücksichtigung der Angabe aus der Datenbank und einer daraus resultierenden Beeinflussung der jeweiligen Automatisierungskomponente eingerichtet.

## Beschreibung

Die Erfindung betrifft eine Automatisierungsanordnung mit einer Vielzahl an industriellen Automatisierungskomponenten und ein Verfahren zur Verwaltung einer industriellen Automatisierungskomponente gemäß dem Patentanspruch 9.

Industrielle Automatisierungsanordnungen lassen sich allgemein als ein System beschreiben, in welchem als Komponenten (Automatisierungskomponenten) Sensoren, Aktoren, Bedienelemente, Infrastrukturbausteine (Router, Server, Switche und dergleichen) in einem Datennetzwerk (z.B. Profibus, Feldbus, LAN etc.) angeordnet sind.

Eine Automatisierungsanordnung, allgemein auch System genannt, hat dabei den Zweck eine bestimmte Aufgabe zu erfüllen. Dazu lässt sich ein System in der Regel zergliedern. Die einzelnen Bestandteile, welche voneinander eindeutig abzugrenzen sind, sind die genannten Komponenten.

Eine Komponente erfüllt somit bestimmte Teilaufgaben eines Systems und leistet einen Beitrag zur Funktionsfähigkeit des Systems. Damit das System als Ganzes seine Aufgabe erfüllt, ist das korrekte Zusammenspiel aller Komponenten notwendig. Damit die Komponente die Aufgabe erfüllen kann, wird eine Laufzeitumgebung bzw. Infrastruktur benötigt.

In einer Laufzeitumgebung oder auf einer Infrastruktur können mehrere gleich- oder verschiedenartige Komponenten gleichzeitig zur Ausführung gelangen. Eine eingebaute Komponente wird Teil der Infrastruktur. Zur Weitergabe der Zwischenergebnisse einzelner Teilaufgaben besitzen die Komponenten Schnittstellen nach außen.

Ein hierarchischer Aufbau eines Systems lässt sich mit dieser Struktur ebenfalls erreichen. Dazu können einem System selbst Schnittstellen für Verknüpfungen zugeordnet werden. Ein aktives System kann dann wiederum als Komponente aufgefasst werden. Durch diese Schachtelung wird erreicht, dass dem Nutzer eines Systems der Aufbau und damit die Komplexität des Systems verborgen bleibt. Der Verwalter eines Systems hingegen kann sich schrittweise die Zusammenhänge erfragen und das System pflegen und funktionsfähig halten.

Allgemein können Komponenten in einem System in einigen Fällen nur einmal, oft aber gleichzeitig von mehreren anderen Komponenten genutzt werden. Je öfter eine Komponente von einer anderen genutzt wird, desto mehr der verfügbaren Kapazität wird belegt. Dabei kann zu einer Komponente die Auslastungsinformation bzgl. der vorhandenen und der genutzten Kapazität ermittelt werden. Die Auslastungsinformation kann auf beliebigem Weg (also auch manuell) ermittelt und bereitgestellt werden.

Zu dem hier gezeigten Aufbau kommt den Komponenten zur Laufzeit noch eine weitere Funktion zu: Eine Komponente zeigt den eigenen Zustand und den Zustand der Verbindung zu den mit ihr verknüpften abhängigen Komponenten an. Von außen kann also jederzeit abgelesen werden, ob die Komponente funktioniert oder eine Verknüpfung nicht mehr funktionsfähig ist.

Oft wird gefordert, dass ein System dezentral aufgebaut sein sollte, d.h. Entscheidungen werden nicht von einer zentralen Komponente getroffen, sondern die Aufgaben werden so verteilt, dass auf unterschiedlichen Komponenten lokal entschieden werden kann. Dies bedeutet für den vorliegenden Systembegriff oftmals, dass Komponenten durch die Auswahl und Nutzung einer bestimmten Verknüpfung eine Entscheidung dezentral treffen. Bei einem zentralen Ansatz wäre dies das Versenden der Information an einen zentralen Punkt und dort wird dann entschieden.

Es ist ein Problem solcher dezentraler Strukturen, dass das System zwar verwaltet und zur Laufzeit konfiguriert werden kann, aber dieser Vorgang immer noch von außen durch manuelle Eingriffe oder durch eine übergeordnete Verwaltungsinstanz erfolgt.

Es ist also eine Aufgabe der vorliegenden Erfindung, eine Automatisierungsanordnung mit industriellen Automatisierungskomponenten vorzuschlagen, die weitgehend die eigene Konfiguration, Überwachung und Optimierung durchführen soll.

Die Aufgabe wird durch eine Automatisierungsanordnung gemäß dem Patentanspruch 1 und durch ein Verfahren gemäß dem Patentanspruch 9 gelöst.

Dabei ist ein wesentlicher Gedanke der Erfindung, dass jeder oder zumindest einer Mehrzahl der Komponenten (Automatisierungskomponenten) eine eigene Verwaltungsinstanz (Autonomer Verwalter) zugeordnet wird, die weitgehend unabhängig von der Komponente aufgebaut sein soll, damit sie den Zustand der Komponente und die Verknüpfungen der Komponente auch im Fehlerfall erfassen und bewerten kann. Dazu ist die Verwaltungsinstanz für den Zugriff auf die jeweils zu verwaltende Komponente mit Sensoren und Aktoren ausgerüstet. In einer Wissensbasis (z.B. in Form einer Datenbank) ist dabei hinterlegt, wie aus den Sensorwerten der aktuelle Zustand der Komponente ermittelt wird. Umgekehrt ist in der Wissensbasis ebenso hinterlegt, wie sich die Komponente verhält, bzw. wie die Komponente reagiert, wenn sie von außen manipuliert wird. Weiterhin ist in der Wissensbasis hinterlegt, welcher Zustand und welches Verhalten der Komponente oder sogar des Gesamtsystems (Automatisierungsanordnung) wann gewünscht ist, und wie dieses Ziel durch Manipulation der einzelnen Komponente erreicht werden kann. Dies wird im Folgenden als Teil einer "Strategie" verstanden.

Kurz gesagt erfüllt die Verwaltungsinstanz folgende Aufgaben:
a) Überwachung der Ausführung der Komponente (Ressourcenverbrauch, Ressourcenbedarf, Performance, Fehlermeldungen, Qualität einer Dienstausführung),
b) Analyse des Systemzustands der Komponente,
c) Stabilisierung im Problemfall,
d) Rekonfiguration und Wiederherstellen der Funktionalität ("Heilung" oder "Selbstheilung"),
e) Optimierung hinsichtlich neuer Anforderungen.

Die Verwaltungsinstanz führt dadurch in zyklischer Abfolge drei verschiedene Schritte (Phasen) durch:
a) Beobachten (dabei werden die Sensoren einer Komponente abgefragt),
b) Bewerten (Ermittlung des aktuellen Zustandes der Komponente aus den ermittelten Sensorwerten und der Wissensbasis),
c) Bedienen (Übertragung der Ergebnisse der zweiten Phase auf die Komponente mittels der Effektoren).

Die Lösung der Aufgabe sieht dabei eine Automatisierungsanordnung mit einer Mehrzahl an industriellen Automatisierungskomponenten vor, wobei eine Mehrzahl dieser Automatisierungskomponenten zur Laufzeit verwaltbar ist und mit jeweils einer Verwaltungsinstanz verknüpft ist, und wobei die Verwaltungsinstanz mit ersten Mitteln zur Zustandserfassung der Automatisierungskomponente und mit zweiten Mitteln zur Beeinflussung der Automatisierungskomponente ausgestattet ist. Dabei ist die Verwaltungsinstanz mit einer Datenbank als Träger einer Wissens- und Strategiebasis verknüpft, wobei die Datenbank zumindest eine Angabe über die durch die Automatisierungsanordnung zu erfüllende Aufgabe und/oder eine Angabe über einen für die Automatisierungsanordnung anzustrebenden Zustand, auch im Sinne einer Strategie, enthält, und die Verwaltungsinstanz ist zu einer Bewertung eines erfassten Zustandes unter Berücksichtigung der Angabe aus der Datenbank und einer daraus resultierenden Beeinflussung der jeweiligen Automatisierungskomponente eingerichtet. Die Automatisierungskomponenten einer solchen Anordnung können weitgehend autonom, d.h. ohne Benutzereingriff, auf veränderte Betriebsbedingungen, Aufgaben, Ziele, Fehler etc. reagieren und die Funktion der Automatisierungsanordnung sicherstellen bzw. optimieren.

Die Lösung der Aufgabe sieht weiter ein Verfahren zur Verwaltung einer Automatisierungskomponente in einer industriellen Automatisierungsanordnung vor, wobei der Automatisierungskomponente eine Verwaltungsinstanz zugeordnet wird, und wobei die Verwaltungsinstanz mit ersten Mitteln zur Zustandserfassung der Automatisierungskomponente und mit zweiten Mitteln Beeinflussung der Automatisierungskomponente ausgestattet wird. Weiter wird die Verwaltungsinstanz mit einer Datenbank verknüpft, wobei die Datenbank zumindest eine Angabe über die durch die Automatisierungsanordnung zu erfüllende Aufgabe und/oder eine Angabe über einen für die Automatisierungsanordnung oder die Automatisierungskomponente anzustrebenden Zustand enthält. In einem ersten Schritt erfasst dabei die Verwaltungsinstanz einen Zustand der zu verwaltenden Automatisierungskomponente mit Hilfe der ersten Mittel, in einem zweiten Schritt führt die Verwaltungsinstanz eine Bewertung der in dem ersten Schritt ermittelten Zustandsinformation unter Berücksichtigung zumindest einer Angabe aus der Datenbank aus, und in einem dritten Schritt ermittelt die Verwaltungsinstanz aus der Bewertung eine resultierende Beeinflussung der jeweiligen Automatisierungskomponente und wendet diese mittels der zweiten Mittel auf diese Automatisierungskomponente an. Durch die im Wesentlichen paarweise Zuordnung von Verwaltungsinstanzen zu Automatisierungskomponenten können die einzelnen Automatisierungskomponenten optimal lokal konfiguriert bzw. beeinflusst werden, wobei durch den Zugriff auf die Datenbank mit lokalen und idealer Weise auch übergeordneten Zielen oder einer Strategie die Aufgabe der gesamten Automatisierungsanordnung berücksichtigt werden kann.

Vorteilhafte Ausgestaltungen der erfindungsgemäßen Automatisierungsanordnung sind in den abhängigen Patentansprüchen angegeben. Die dabei aufgeführten Merkmale und Vorteile gelten sinngemäß auch für das erfindungsgemäße Verfahren.

Vorteilhaft ist in der Datenbank Wissen darüber erfasst, in welcher Weise eine Beeinflussung der jeweiligen Automatisierungskomponente den Zustand dieser Automatisierungskomponente ändert, wobei in diesen Fällen die Verwaltungsinstanz zur Berücksichtigung dieses Wissens bei der Bewertung des erfassten Zustandes eingerichtet ist. Vorteilhaft betrifft die in der Datenbank verzeichnete Angabe eine funktionale Gruppe der Automatisierungskomponenten. Damit kann das Verhalten der einzelnen Automatisierungskomponente an den Zielen einer funktionalen Gruppe oder der Gesamtanordnung ausgerichtet werden.

Dazu umfasst die Datenbank vorteilhaft Wissen darüber, in welcher Weise eine Beeinflussung der jeweiligen Automatisierungskomponente eine Ausübung der übergeordneten Funktion der Gruppe der Automatisierungskomponenten ändert, wobei die Verwaltungsinstanz zur Berücksichtigung dieses Wissens bei der Bewertung eingerichtet ist. Dadurch wird die Verwaltungsinstanz in die Lage versetzt, zielgerichtet Befehle, Anweisungen und andere Konfigurationsmaßnahmen zu ermitteln und auf die einzelne Automatisierungskomponente anzuwenden.

Eine Anzahl von Automatisierungskomponenten kann auf einem gemeinsamen Infrastrukturelement (beispielsweise einem PC, Contoller o.ä.) basieren; in solchen Fällen weist das Infrastrukturelement eine übergeordnete Verwaltungsinstanz auf. Dabei ist die übergeordnete Verwaltungsinstanz vorteilhaft zur Koordination der in den jeweiligen Datenbanken des Infrastrukturelementes gespeicherten Daten über den jeweiligen anzustrebenden Zustand eingerichtet. Sie besitzt dazu vorteilhaft eine eigene Datenbank mit einer Wissensbasis und kann dadurch eine eigene Strategie zur Beeinflussung untergeordneter Verwaltungsinstanzen und damit untergeordneter Automatisierungskomponenten verwenden. Dadurch ist es möglich, die Beanspruchung von gemeinsam genutzten Ressourcen in dem Infrastrukturelement (beispielsweise Speicher, Energie, Bandbreiten, Rechenleistung etc.) zu koordinieren.

Ausführungsbeispiele der erfindungsgemäßen Anordnung werden nachfolgend anhand der Zeichnungen erläutert. Sie dienen gleichzeitig der Erläuterung des erfindungsgemäßen Verfahrens.

Dabei zeigen:
- Figur 1: eine schematische Darstellung zweier miteinander vernetzter Verwaltungsinstanzen (jeweils "Autonomer Verwalter" genannt),
- Figur 2: in schematischer Darstellung eine bekannte Anordnung aus 2 Personal-Computern und drei Druckern,
- Figur 3: die um Verwaltungsinstanzen ergänzte Anordnung aus der Figur 2,
- Figur 4: ein Fließbild einer Anordnung zum Umpumpen von Flüssigkeiten, und
- Figur 5: eine schematische Darstellung der Komponenten zum Umpumpen von Flüssigkeiten.

Zu einem System, welches in den nachfolgenden beiden Ausführungsbeispielen dargestellt ist, wird zu einer industriellen Automatisierungsanordnung, nachfolgend als System bezeichnet, ein separates Netzwerk von Verwaltungsinstanzen, nachfolgend als Autonome Verwalter (AV) bezeichnet, zusätzlich implementiert. Das System selbst wird durch die Autonomen Verwalter jeweils nicht verändert. Das Netzwerk der Autonomen Verwalter hat die Aufgabe, die Selbstverwaltung, also die Konfiguration, die Überwachung und Heilung sowie die Optimierung des jeweiligen Systems durchzuführen.

Dazu wird jeder industriellen Automatisierungskomponente, nachfolgend Komponente genannt, ein Autonomer Verwalter zugeordnet, der genau auf einen Rollentyp der Komponente passt. Ein Autonomer Verwalter ist abhängig von der Komponente aufgebaut bzw. konfiguriert, da er den Zustand der Komponente und der Verknüpfungen erfassen und bewerten können muss.

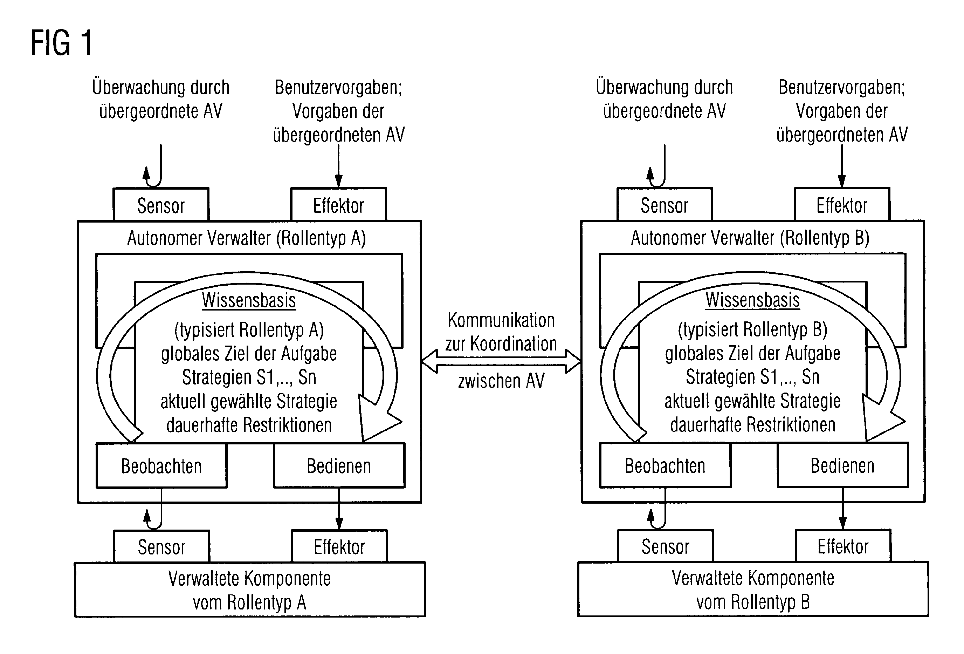

Der Aufbau zweier Autonomer Verwalter ist in der Figur 1 dargestellt.

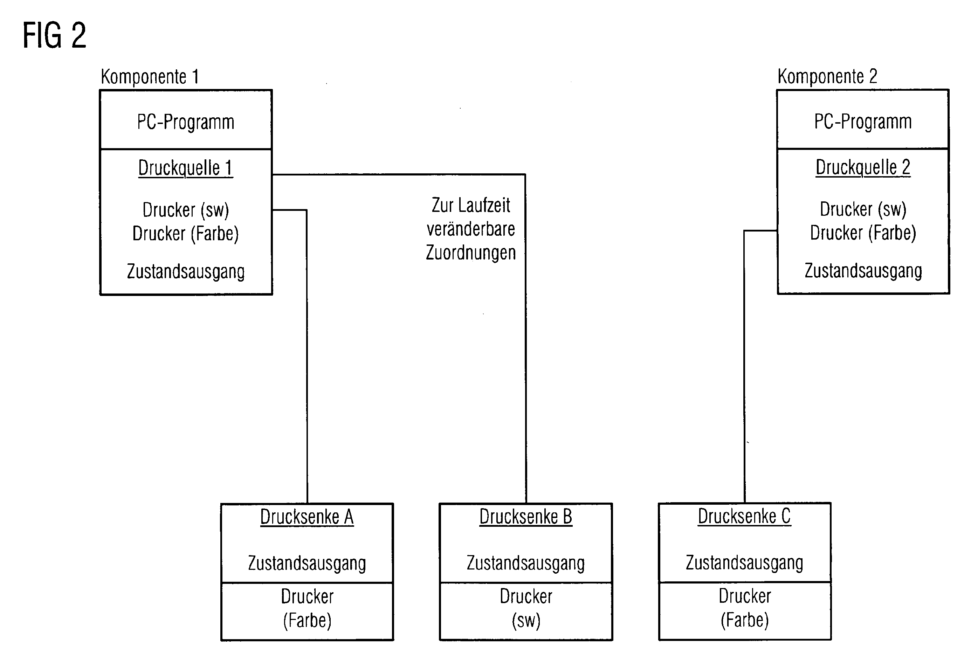

In der Figur 2 wird als ein erstes Beispiel ein Drucksystem betrachtet. Die Aufgabe des Drucksystems ist es, von PC-Programmen Druckaufträge an Drucker zu senden, welche die Druckaufträge dann ausdrucken. Ein klassisches Drucksystem besteht in diesem Fall aus den drei Rollentypen PC-Programm, Druckserver und Drucker. Die Komponenten 1 und 2 sind ausführbare PC-Programme (z.B. eine Textverarbeitung) auf einem Computer. Die Drucker hingegen sind jeweils an eine spezielle Hardware gebunden, die das Ausdrucken der Information ermöglicht. Die PC-Programme sind an ein Infrastrukturelement in Form eines Computers mit einem Betriebssystem und einem Netzwerkanschluss gebunden. Die Drucker sind jeweils an einen netzwerkfähigen realen Drucker als Infrastrukturelemente gebunden. Die Infrastrukturelemente stellen den Komponenten also eine Ausführungsumgebung bestehend aus Hard- und Softwareressourcen zur Verfügung. Hinzu kommt die Fähigkeit, mit der Umgebung zu kommunizieren. Eine eingebaute Komponente wird Teil der Infrastruktur.

Nach innen betrachtet ist das Drucksystem als aktives System mit seinen einzelnen Komponenten zu erkennen. Nach außen hingegen kann die innere Struktur nicht mehr gesehen werden und das Drucksystem kann als Komponente von anderen Systemen dem Rollentyp "Drucksystem" zugeordnet werden. Ein PC-Programm kann Druckaufträge an einen Farb-Drucker oder einen SW-Drucker senden.

Die konkrete Zuordnung der Komponenten in der Instanzsicht ist in der Figur 2 zu sehen. Die Druckquellen nehmen dabei lokal auf einer Komponente die Druckaufträge entgegen und geben diese an die Drucksenken, also die Drucker, weiter. Dort wird lokal für den Ausdruck des Druckauftrages gesorgt. Die Komponente Druckquelle1 ist eine Komponente mit den Schnittstellen zu je einem Farb- und SW-Drucker. Zusätzlich wird der Zustand der Komponente und der Komponente nach außen sichtbar gemacht, so dass zur Laufzeit der Zustand der Komponente erfragt werden kann. Zur Laufzeit kann also die Drucksenke A durch die Druckersenke C ersetzt werden, da diese ebenfalls vom Rollentyp Farb-Drucker ist. Die Drucker zeigen nach außen ebenfalls ihren Zustand an, so dass eine Beurteilung von außen möglich wird.
Bei genauerer Betrachtung ist in der Figur 2 zu erkennen, dass zunächst zwei separate Drucksysteme existieren, da der rechte Teil mit dem linken nicht durch Verknüpfungen verbunden ist. Ein Vorteil der dezentralen Lösung ist also eine stärkere Unabhängigkeit der Komponenten voneinander. Das Drucksystem existiert weiter, wenn der rechte Teil ausfällt.

Die Druckquelle 2 kann zurzeit nicht schwarzweiß drucken, aber der Farbdruck erfolgt wie gewohnt. Für den SW-Druck muss zur Laufzeit nur eine Verknüpfung zu einem SW-Drucker wie beispielsweise Drucksenke B hergestellt werden. Der kleinste Einstiegspunkt ist im Fall des Drucksystems die Druckquelle zu einem PC-Programm.

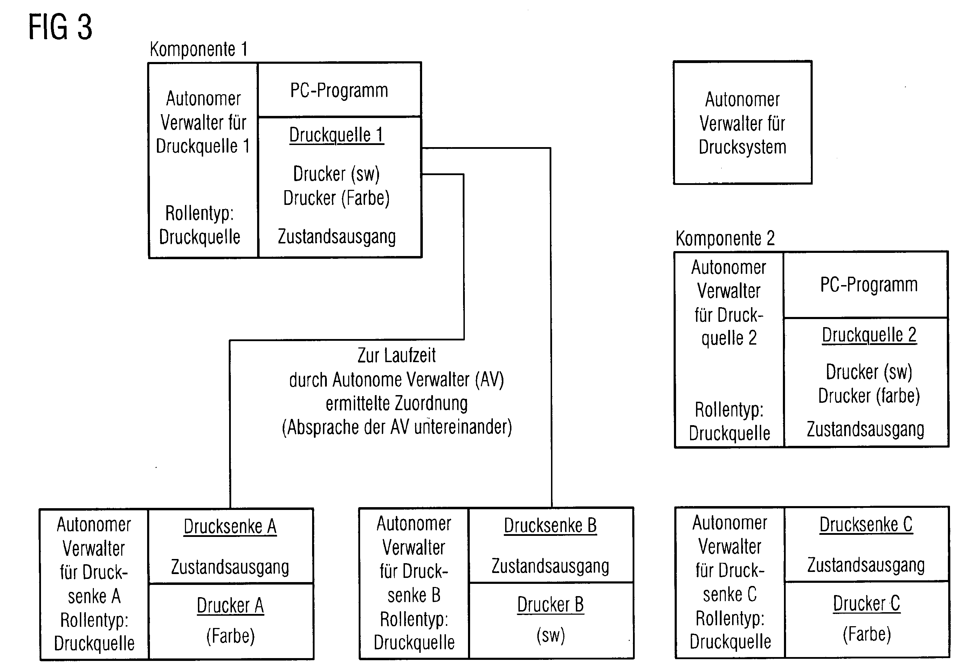

In der Figur 3 ist dargestellt, dass die Druckquelle nun mit einem Autonomen Verwalter als Verwaltungsinstanz verknüpft ist, der in einem ersten Schritt dafür sorgt, dass entsprechende Drucker in der Umgebung gesucht und die je nach Strategie beste Drucksenke zugeordnet wird. Dies erfolgt über die Kommunikation der Autonomen Verwalter untereinander. Der übergeordnete Autonome Verwalter des Drucksystems gibt lediglich die Strategie vor, die in der diesem übergeordneten Autonomen Verwalter zugeordneten Datenbank (Wissensbasis) definiert ist.

Beispiele für Strategien sind die Verwendung des schnellsten Druckers oder den Drucker mit dem größten Papiervorrat. Während der Ausführung der Druckquelle überwacht der jeweils zugeordnete lokale Autonome Verwalter diese ständig. Treten Fehler auf, so wird darauf reagiert. Fällt beispielsweise ein Drucker aus, so registriert dies der Autonome Verwalter und ordnet einen neuen Drucker zu. Regelmäßig wird auch ohne den Ausfall einer verknüpften Komponente überprüft, ob die Zuordnung günstig im Sinne der aktuellen Strategie ist. Dann wird unter dieser Voraussetzung nach der besten Komponente gesucht und diese neu verknüpft. Dies kann auch die ursprüngliche Komponente sein.

Das hier aufgeführte Beispiel des Drucksystems kann zur Realisierung ein Peer-To-Peer-System nutzen, welches einige Basisdienste wie die Suche nach bestimmten Komponenten ermöglicht. Andere Vorgehensweisen sind jedoch auch möglich. Insgesamt werden alle drei Kriterien der Selbstverwaltung wie Konfiguration, Überwachung und Heilung sowie der Optimierung mit Hilfe des Autonomen Verwalters erfüllt. Daher kann das vorliegende System als autonomes Drucksystem bezeichnet werden.

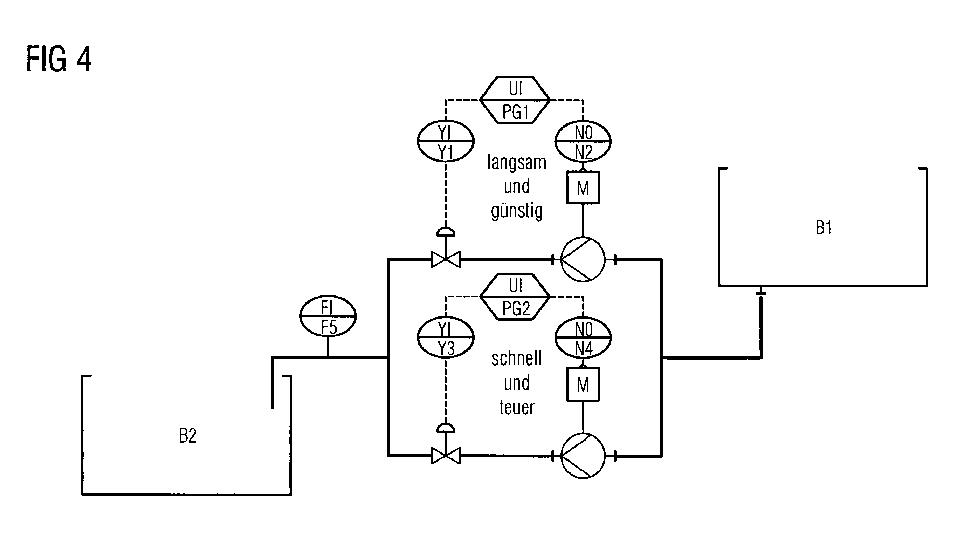

Das zweite Beispiel befasst sich näher mit den Gegebenheiten des leit- bzw. automatisierungstechnischen Umfeldes. Es ist die Steuerung eines Umpumpvorganges, dessen R&I-Fließbild in der Figur 4 dargestellt ist. Für den Umpumpvorgang können zwei verschiedenartige Pumpengruppen PG1 und PG2 eingesetzt werden. PG1 führt den Vorgang langsam und kostengünstig durch. PG2 dagegen arbeitet schnell und verursacht dabei höhere Kosten. Daraus ergeben sich drei Fahrweisen. Die Erste ist ein langsames Umpumpen, die Zweite ein schnelles Umpumpen und die dritte Fahrweise ist der Einsatz beider Pumpengruppen zur gleichen Zeit, so dass ein sehr schnelles Umpumpen erreicht werden kann.

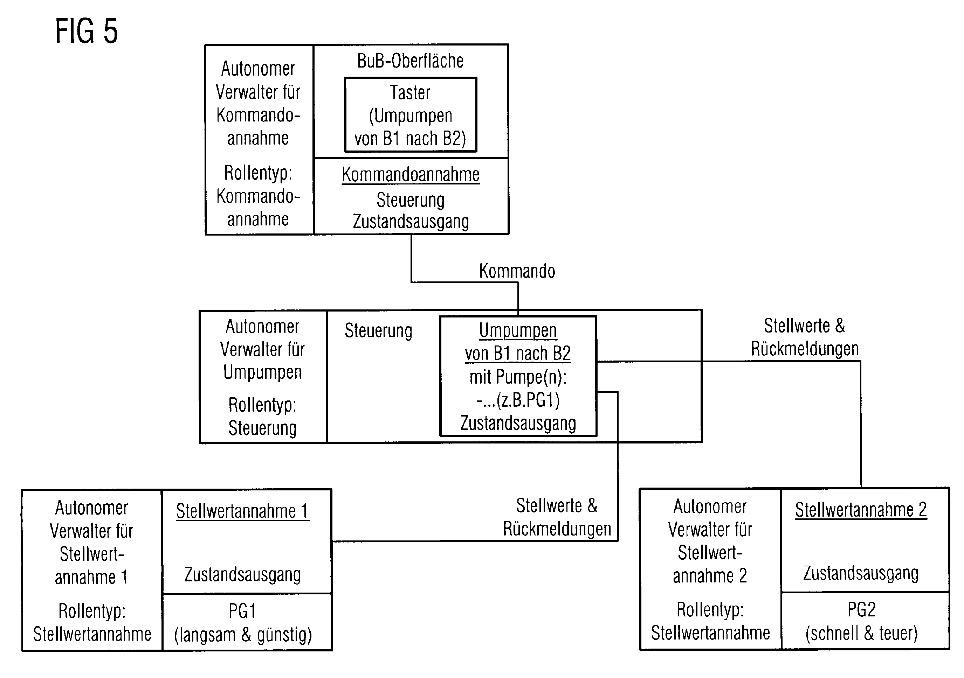

In der Figur 5 ist der Aufbau der Steuerung dieser Anordung als System dargestellt. In diesem Beispiel sind vier Komponenten mit unterschiedlichen Rollentypen zu sehen. Die erste Komponente ist die Bedien- und Beobachtungsoberfläche (BuB-Oberfläche). In ihr werden drei Taster zur Verfügung gestellt, um den Umpumpvorgang von Behälter B1 nach Behälter B2 in den drei einzelnen Fahrweisen direkt anzuwählen. Die Komponente besitzt also drei Schnittstellen nach außen.

Die Komponente Steuerung hält für jeden der drei Fahrweisen entsprechende Steuerungsprogramme zur Ausführung vor. Die beiden Ausgangsschnittstellen zu den Rollentypen "Umpumpen (langsam und günstig)" und "Umpumpen (schnell und teuer)" werden mit den entsprechenden Komponenten PG1 ("Pumpengruppe") für "Umpumpen (langsam und günstig)" und PG2 für "Umpumpen (schnell und teuer)" verknüpft. Die Sicht in Figur 5 stellt somit das aktive System der Steuerung dar; dabei ist die dezentrale zur Laufzeit verwaltbare Steuerung zu sehen.

Die zentrale Komponente, also die Steuerung, welche den Umpumpvorgang von B1 nach B2 steuert, lässt sich im Fehlerfall leicht ersatzweise bereitstellen, da die Steuerung nur den Umpumpvorgang als solchen kennen muss. Welche Pumpengruppe dazu verwendet wird, kann von außen zur Laufzeit angegeben werden. Der Nutzer kann dynamisch zwischen den drei Fahrweisen wählen, indem er die Vorgabe der Pumpengruppen zur Laufzeit ändert. Dies muss nicht unbedingt der Anlagenfahrer sein, der über die BuB-Oberfläche startet, sondern auch ein externer Algorithmus bzw. eine externe Person wie der Instandhalter, der eine Pumpengruppe zu Wartungszwecken außer Betrieb genommen hat. Im Gegensatz zu heutigen Automatisierungssystemen kann die Konfiguration und die Auslegung der Steuerung also dynamisch zur Laufzeit erfolgen. Der kleinste Einstiegspunkt ist im Fall der Steuerung die Kommandoannahme zu einer BuB-Oberfläche.

In der Figur 5 ist weiter zu sehen, wie sich das Steuerungssystem ergänzt um die Autonomen Verwalter darstellt. Der Autonome Verwalter der BuB-Oberfläche sucht nach einer Steuerung, die einen Umpumpvorgang steuern kann und verknüpft die Komponenten miteinander. Der Autonome Verwalter für das Umpumpen sucht nun nach einer entsprechenden Pumpengruppe.

An dieser Stelle wird die Bedeutung der Strategie, definiert in der jeweiligen Wissensbasis bzw. Datenbank, im Bereich der Automatisierungstechnik verdeutlicht. Die Auswahl der Pumpengruppe ist von den globalen Vorgaben des Autonomen Verwalters des Steuerungssystems abhängig. Lautet die Strategie günstig zu agieren, so wird Pumpengruppe PG1 ausgewählt. Soll jedoch schnell umgepumpt werden, so wird PG2 ausgewählt. Muss besonders schnell umgepumpt werden, so werden beide Pumpengruppen zugleich eingesetzt. Es können aber auch Konflikte in Strategien entstehen, so dass Kompromisse gefunden werden müssen, beispielsweise, wenn zugleich günstig und schnell umgepumpt werden soll. Dies zu lösen ist die Aufgabe der Autonomen Verwalter. Die Konfigurationen werden während einer Optimierungsphase an veränderte Strategien angepasst.

Der Nutzer erfährt von der Auswahlproblematik und den Strategien nichts. Er kann die Strategie bei Bedarf erfragen oder selbst vorgeben. Letztendlich wird er einen funktionierenden Umpumpvorgang nach Betätigen des Schalters beobachten können. Insgesamt erhält der Nutzer ein autonom agierendes System zur Steuerung des Umpumpvorgangs.

## Patentansprüche

1. Automatisierungsanordnung mit einer Vielzahl an industriellen Automatisierungskomponenten,
**dadurch gekennzeichnet,**
**dass** eine Mehrzahl dieser Automatisierungskomponenten zur Laufzeit verwaltbar ist und mit jeweils einer Verwaltungsinstanz verknüpft ist,
**dass** die Verwaltungsinstanz mit ersten Mitteln zur Zustandserfassung der Automatisierungskomponente und mit zweiten Mitteln zur Beeinflussung der Automatisierungskomponente eingerichtet ist,
**dass** die Verwaltungsinstanz mit einer Datenbank verknüpft ist, wobei die Datenbank zumindest eine Angabe über die durch die Automatisierungsanordnung zu erfüllende Aufgabe und/oder eine Angabe über einen für die Automatisierungsanordnung anzustrebenden Zustand enthält, und
**dass** die Verwaltungsinstanz zu einer Bewertung eines erfassten Zustandes unter Berücksichtigung der Angabe aus der Datenbank und einer daraus resultierenden Beeinflussung der jeweiligen Automatisierungskomponente eingerichtet ist.

2. Automatisierungsanordnung nach Patentanspruch 1,
**dadurch gekennzeichnet,**
**dass** die zu erfüllende Aufgabe und/oder der für die Automatisierungsanordnung anzustrebende Zustand eine funktionale Gruppe der Automatisierungskomponenten betrifft.

3. Automatisierungsanordnung nach einem der vorhergehenden Patentansprüche,
**dadurch gekennzeichnet,**
**dass** die Datenbank Wissen darüber umfasst, in welcher Weise eine Beeinflussung der jeweiligen Automatisierungskomponente den Zustand dieser Automatisierungskomponente ändert, und
**dass** die Verwaltungsinstanz zur Berücksichtigung dieses Wissens bei der Beeinflussung der Automatisierungskomponente eingerichtet ist.

4. Automatisierungsanordnung nach einem der Patentansprüche 2 oder 3,
**dadurch gekennzeichnet**,
die Datenbank Wissen darüber umfasst, in welcher Weise eine Beeinflussung der jeweiligen Automatisierungskomponente eine Ausübung der übergeordneten Funktion der Gruppe der Automatisierungskomponenten ändert, und
dass die Verwaltungsinstanz zur Berücksichtigung dieses Wissen bei der Bewertung eingerichtet ist.

5. Automatisierungsanordnung nach einem der vorhergehenden Patentansprüche,
**dadurch gekennzeichnet,**
**dass** eine Anzahl der Automatisierungskomponenten auf einem gemeinsamen Infrastrukturelement basieren,
wobei dieses Infrastrukturelement eine übergeordnete Verwaltungsinstanz aufweist.

6. Automatisierungsanordnung nach Patentanspruch 5,
**dadurch gekennzeichnet,**
**dass** die übergeordnete Verwaltungsinstanz zur Koordination der in den jeweiligen Datenbanken des Infrastrukturelements gespeicherten Daten über den jeweiligen anzustrebenden Zustand eingerichtet ist.

7. Automatisierungsanordnung nach einem der vorhergehenden Patentansprüche,
**dadurch gekennzeichnet,**
**dass** die ersten Mittel Sensoren und/oder die zweiten Mittel Aktoren sind.

8. Automatisierungsanordnung nach einem der vorhergehenden Patentansprüche,
**dadurch gekennzeichnet,**
**dass** die ersten Mittel Schnittstellen zum Empfang und/oder Abrufen von Zustandsdaten und/oder die zweiten Mittel Schnittstellen zur Übertragung von Befehlsdaten sind.

9. Verfahren zur Verwaltung einer Automatisierungskomponente in einer industriellen Automatisierungsanordnung,
**dadurch gekennzeichnet,**
**dass** der Automatisierungskomponente eine Verwaltungsinstanz zugeordnet wird,
**dass** die Verwaltungsinstanz mit ersten Mitteln zur Zustandserfassung der Automatisierungskomponente ausgerüstet ist,
**dass** die Verwaltungsinstanz mit zweiten Mitteln zur Beeinflussung der Automatisierungskomponente ausgestattet ist,
**dass** die Verwaltungsinstanz mit einer Datenbank verknüpft ist, wobei die Datenbank zumindest eine Angabe über die durch die Automatisierungsanordnung zu erfüllende Aufgabe und/oder eine Angabe über einen für die Automatisierungsanordnung anzustrebenden Zustand enthält, und
**dass** die Verwaltungsinstanz in einem ersten Schritt einen Zustand der zu verwaltenden Automatisierungskomponente mit Hilfe der ersten Mittel erfasst,
**dass** die Verwaltungsinstanz in einem zweiten Schritt unter Berücksichtigung einer Angabe aus der Datenbank eine Bewertung der Zustandsinformation durchführt,
**dass** die Verwaltungsinstanz in einem dritten Schritt aus der Bewertung eine resultierende Beeinflussung der jeweiligen Automatisierungskomponente ermittelt und diese durch die zweiten Mittel auf die Automatisierungskomponente anwendet.

10. Verfahren nach Patentanspruch 9,
**dadurch gekennzeichnet,**
**dass** die Datenbank zumindest eine weitere Angabe über die durch die Automatisierungskomponente zu erfüllende Aufgabe und/oder eine Angabe über einen für die Automatisierungskomponente anzustrebenden Zustand enthält, wobei die weitere Angabe für die Bewertung verwendet wird.
